# EUROPEAN PATENT SPECIFICATION

(11) **EP 0 851 806 B1**
(45) Date of publication and mention of the grant of the patent: **27.06.2001**
(21) Application number: 96931355.0
(22) Date of filing: 20.09.1996
(51) Int. Cl.: B29C 57/02

(54) **A METHOD OF SOCKETING A PIPE**
VERFAHREN ZUM HERSTELLEN EINER MUFFE AM ENDE EINES ROHRES
PROCEDE POUR MANCHONNER UN TUYAU

(30) Priority: 20.09.1995 SE 9503256; 11.01.1996 SE 9600091
(43) Date of publication of application: 08.07.1998
(73) Proprietor: Uponor Innovation AB, 513 81 Fristad (SE); VINIDEX TUBEMAKERS PTY. LTD., Gordon, NSW 2072 (AU)
(72) Inventor: JOHANSSON, Mats, S-513 34 Fristad (SE); JÄRVENKYLÄ, Jyri, FIN-15870 Hollola (FI)
(74) Representative: Ström, Tore
(86) International application number: SE9601171
(87) International publication number: WO9710942

(56) References cited:
- DE-B- 2 242 923
- US-A- 3 852 016

## Description

The present invention relates to a method of socketing a pipe of oriented plastic having an annular groove inside the socket. This groove is provided to receive an elastic gasket for sealing between the socket and a spigot end of another pipe when two pipes are to be interconnected.

The common method in forming a socket or bell on a pipe of plastic which is not oriented, and at the same time providing an annular groove inside the socket comprises heating of an end portion of the pipe to a temperature substantially above the glass transition temperature of amorphous plastic or the crystalline melting point of crystalline plastic, respectively, and pushing the heated end portion of the pipe onto a mandrel having a collapsible core for forming said groove. After cooling of the end portion the core is collapsed and the socketed pipe is withdrawn from the mandrel. This method is diclosed e.g. in DE-B-2 242 923.

It is also prior art to slip a sealing ring or gasket onto the mandrel and to form the groove in the end portion of the pipe over the sealing ring which is left in the groove and is withdrawn from the mandrel together with the pipe.

When the socket shall be formed on a pipe of oriented plastic, particularly of MOPVC (molecular oriented polyvinylchloride) two problems are encountered which do not exist in case of pipes of non-oriented plastics material, viz.
1) to avoid stress concentration in the plastic material during socketing in the region where the groove shall be formed (the material is more sensitive to cracking around the periphery than normally because draw normally is higher in the hoop direction than in the axial direction), and
2) to control accurately the degree of possible axial shrinkage during socketing thus avoiding unnecessary compression that might reduce the elongation at break.

These problems are overcome by the method of the invention defined by the features of claim 1.

Further embodiments of the invention are defined by the features of the dependent claims.

When the oriented plastic is heated much over the glass transition temperature or the crystalline melting point, respectively, it will shrink onto the mandrel, which increases the friction between the pipe and the mandrel. The heated material also is softer, and by the combination of softer material and increased friction the plastic will be compressed when the heated end portion is pushed onto the mandrel. Heating of the end portion of the pipe is necessary because the forces required to push the end portion over the expanded collapsible core, the sealing ring, or a prefabricated groove core, respectively, will be too high if the temperature of the plastic is below the glass transition temperature or the crystalline melting point, respectively. However, in the method of the invention the compression of the plastic is well controlled and limited mainly to the region of the end portion of the pipe wherein the groove inside the socket is to be located, and thus the forces necessary to move the end portion of the pipe over the core or the sealing ring, respectively, can still be kept at a low and acceptable value. If the pipe is manufactured with axial draw then the heating of the end portion of the pipe will cause axial draw of the pipe to be reduced which provides an increase of the wall thickness in said region sufficient to compensate for the hoop streching of the pipe wall not only where the groove is located but also in the cylindrical part of the pipe.

By limiting the heating of the plastic above the glass transition temperature or the crystalline melting point, respectively, to the region wherein the groove inside the socket is to be located the two problems mentioned above thus will be overcome.

US-A-4,276,010 disloses a method of socketing plastic pipes which are to be interconnected by joining a spigot end of one pipe to the socket end of another pipe by adhesion or glueing, no groove being provided in the socket. The end portion of the pipe to be socketed is pushed onto a cylindrical mandrel portion which has substantially the same inside diameter as the pipe, and is heated to a temperature which is at least the memory temperature of the plastic (for polyvinylchloride the memory temperature is approximately 180°C) but not above the temperature at which the physical properties or even the chemical composition may change (for polyvinylchloride this temperature is approximately 250°C). After heating of the end portion of the pipe to the desired temperature the end portion is pushed axially onto a wider cylindrical mandrel portion via a conical transition between said mandrel portions, the wider mandrel portion and the transition defining the shape of the socket to be formed. Since no groove is formed in the inside surface of the socket the wider mandrel portion has no core or a sealing ring slipped thereonto and, accordingly, the extreme expansion of the end portion of the pipe by the end portion being pressed over such a core or sealing ring, respectively, does not form part of the socketing procedure in this case. Morever, this piece of prior art does not refer to socketing of a pipe of oriented plastic and thus the problems involved are not mentioned or even touched upon therein.

The invention will be described in more detail below reference being made to the accompanying drawings disclosing illustrative embodiments of the invention and wherein
FIGS 1 - 3 and 4A are side views of a mandrel with a pipe shown in axial cross sectional view and disclose successive steps in the method of the invention in one embodiment thereof,
FIGS 4B and 4C are fragmentary views of the mandrel in FIGS 1-3 and 4A disclosing a modified structure of the mandrel,
FIGS 5 - 9 are similar views as FIGS 1 - 3 and 4A disclosing successive steps in the method of the invention in a second embodiment thereof, and
FIGS 10 - 14 are similar views as FIGS 1 - 3 and 4A disclosing successive steps in the method of the invention in a third embodiment thereof.

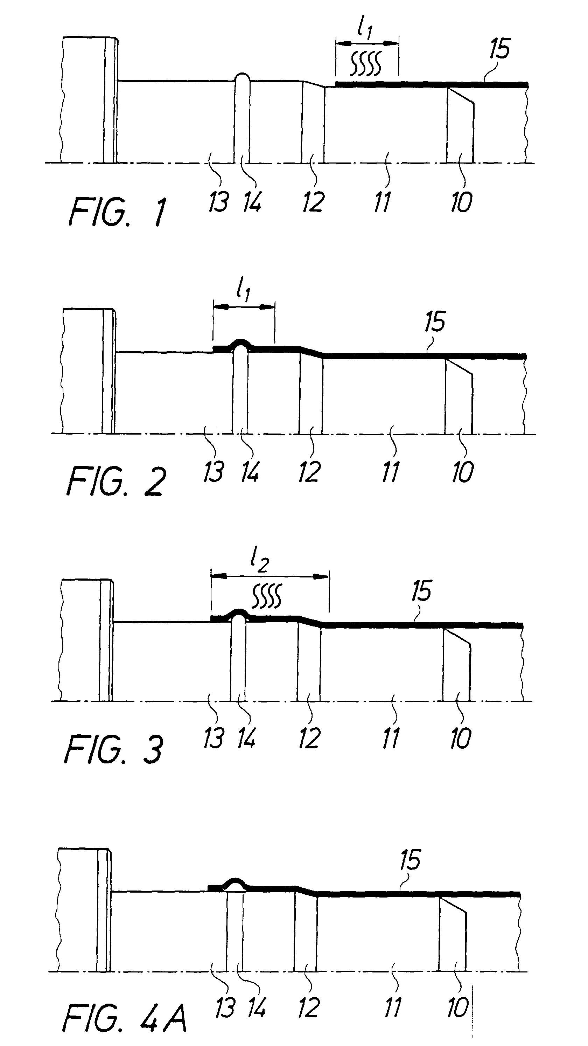

With reference to FIGS 1 - 3 and 4A the mandrel used in the embodiment of the method of the invention disclosed therein is made of a hard wear resistent material such as steel, or another suitable material as is well known in the art. The mandrel comprises a conical end element 10 forming the tip of the mandrel, a cylindrical first mandrel element 11, a conical transition element 12, and a second cylindrical mandrel element 13. The mandrel can have vacuum passages and means (not shown) for heating and/or cooling the mandrel as may be necessary. On mandrel element 13 there is provided a collapsible core 14 which can be of a construction well known in the art. The collapsible core can be adjusted by means not shown between an expanded condition shown i FIGS 1 - 3, wherein the core forms an annular ridge the shape of which corresponds to the shape of the annular groove to be provided inside the pipe socket or bell to be formed on the mandrel, and a collapsed condition shown in FIG 4A, wherein the core is flush with the cylindrical surface of mandrel element 13. Mandrel element 13 and transition element 12 define the shape of the socket to be formed.

A pipe of plastic the end portion of which is shown at 15 has uniform cylindrical shape and shall be formed with a socket or bell in said end portion and with an annular groove in the inside surface of the socket for the reception of an elastic gasket, usually a rubber gasket, which shall form a seal between the socket and the spigot end of another pipe inserted into the socket. As an initial step of the method of the invention the pipe end portion 15 may be preheated to a temperature which is close to but still below a temperature T₀ which is the glass transition temperature T_{g} of an amorphous plastic material, or the crystalline melting point Tₘ of a crystalline plastic material, respectively, although such preheating is not necessary in practising the method of the invention. After preheating the pipe end portion 15 is pushed onto mandrel element 11 which has a diameter substantially corresponding to the inside diameter of the pipe, FIG 1. The outer surface of the mandrel can be made smooth and slippery e. g. by a chrome-tetrafluoro ethylene coating. Additionally, a lubricant such as silicone oil can be applied to the surface of the mandrel to adjust the friction between the pipe and the mandrel when the pipe is pushed onto the mandrel. A length l₁ of the pipe end portion at the opening of the pipe is heated to a temperature T₁ above temperature T₀ when the pipe end portion is on mandrel element 11. This heating can be effected by hot water spray, by radiation heating, or by circulating hot air in a jacket surrounding the pipe. However, the best result would be obtained by IR heating since the heating effect in that case easily can be focused on a predetermined region of the pipe end. Normal IR radiation comprises wave lengths corresponding to absorption peaks in the material, which causes overheating of the outside surface of the pipe. However, if these wave lengths are shut out by a filter e. g. a quartz glass filter, uniform heating of the length l₁ of the pipe end portion can be obtained as is important in order to control the orientation of the material. For example, for poyethylene material the wavelengths to be filtered away are in the region of 2 to 10 µm, and the effective heating wavelength should be substantially 1.2 µm. The surface of the heated portion of the pipe may be protected by a protective gas. The rest of the end portion of the pipe is kept below the temperature T₀. Temperature T₁, should be below the rupture temperature of the plastic, i.e. the temperature at which further temperature increase involves increasing risk of rupture of the pipe.

The next step in the method comprises pushing of the end portion of the pipe further axially along the mandrel onto mandrel element 13 via transition element 12 the end portion of the pipe being pressed over expanded core 14 to the position disclosed in FIG. 2. As will be seen in FIG 2 length l₁ is dimensioned such that it extends from the opening of the pipe symmetrically at both sides of core 14 so that the groove in the inner surface of the socket will be formed in that length of the pipe. The soft plastic of length l₁ will be stretched in the hoop direction over core 14 and may be slightly compressed axially by the force necessary to move the pipe over the core. By the heating of the end portion of the pipe the possible axial draw of the pipe will be reduced, which increases the wall thickness sufficiently to compensate for the decrease of the wall thickness which is due to the stretching in the hoop direction. Selected surfaces of the mandrel may be rough or serrated in order to increase the friction between the mandrel and the pipe. The roughened or serrated surface in combination with vacuum in the mandrel and/or pressure in a space defined around the mandrel and the pipe thereon provide means for controlling axial shrinkage of the pipe. With the pipe in this position on the mandrel a length 12 of the pipe end portion, FIG 3, may be heated to a temperature T₂ which is above T₀ and can be but is not necessarily the same temperature as T₁. By this heating which also can be effected by radiation heating in a jacket surrounding the pipe the shape of the length 12 of the pipe will snugly conform with the shape of core element 13, transition element 12 and core 14, i.e. this length of the pipe will form the grooved socket and the pipe wall may resume the same wall thickness as the rest of the pipe due to the memory of the plastic. It is possible in this stage to use a pressure chamber, vacuum, or mechanical clamps in order to press the pipe against the mandrel surface under full calibration of the socket and the inside groove thereof as is well known in the art.

After cooling of the end portion of the pipe e. g. by means of sprinkling water, core 14 is collapsed, FIG 4A, and then the socketed pipe is withdrawn from the mandrel.
If the plastic of the pipe is oriented polyvinylchloride (MOPVC), temperature T₀ is about 80°C and temperatures T₁ and T₂ can have the same value or can have different values but should be at most 105°C which is the rupture temperature of MOPVC. Preferably T₁ is 95°C and T₂ is 90°C. Corresponding temperatures for PEX can be T₀ = 135°C, T₁ = 150°C, and T₂ = 140°C but not higher than 190°C.

Instead of using a collapsible core as described above the groove can be formed over a sealing ring which is passed onto the mandrel and is withdrawn from the mandrel together with the pipe, the sealing ring thus forming an integral part of the pipe. In this case the depth of the groove can be reduced and the radius of curvature at the bottom of the groove can be increased as compared with the bottom radius of a groove provided to receive a separate sealing ring or gasket, which means that stress concentrations in the material will be reduced and that the force necessary to push the pipe over the sealing ring on the mandrel will be reduced. Particularly useful in this connection is a gasket of the type having a steel or plastic retainer ring which makes possible further to reduce the internal diameter of the groove without the risk of the gasket slipping out of the groove accidentally. The best profile for a gasket of this type would be symmetrical with a low angle side rise, i. e. less than 30°, in order that the pipe can be more easily pushed over the gasket. Also a very large radius of curvature on the top of the gasket or even a straight top will minimize the stresses acting against the socket groove. A separate core having a preformed groove for a sealing ring therein, can be slipped onto the mandrel. The pipe is pushed over the core which is left in the pipe when it is withdrawn from the mandrel. This feature is particularly well suited to be applied in the method of the invention due to the radial shrinkage of the orientation, which effectively maintains the core in place. This arrangement known in the field of light weight sewer pipes offers a new interesting possibility in the field of connecting oriented polyolefine pressure pipes.

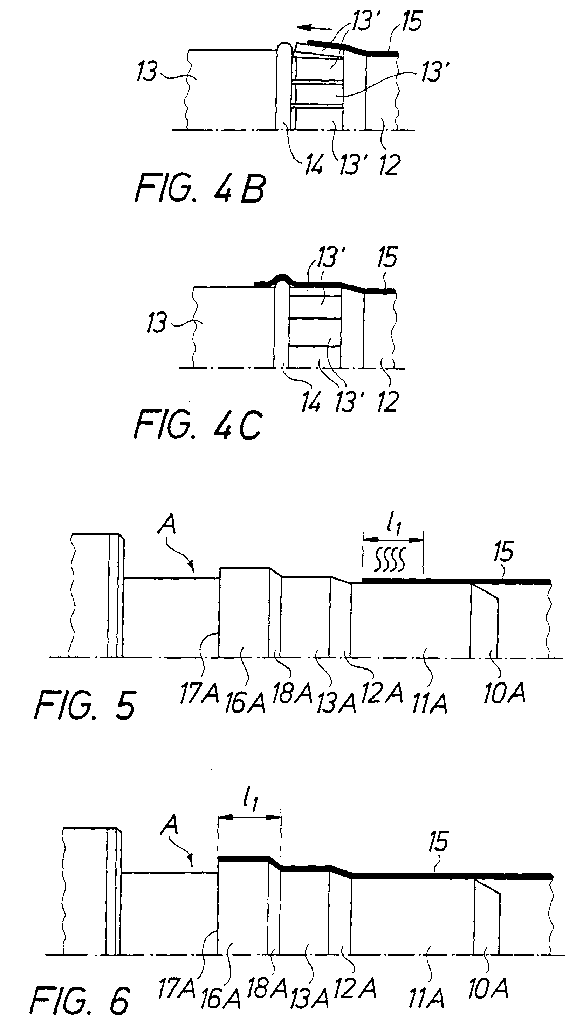

In order to reduce the compression of the pipe when it is pushed onto the mandrel the arrangement disclosed in FIGS 4B and 4C can be used. As shown in these figures the mandrel element comprises segments 13' between the transition element 12 and the core 14 (or a sealing ring slipped onto the mandrel), which are pivotally mounted at the right ends thereof as seen in the figures and can be raised e. g. by hydraulic means so that their left ends will be substantially at the same level as or at a higher level than the top of the core 14 (sealing ring), as seen in FIG 4B. In this position the segments form an ascending path for the pipe 15 when it is pushed onto the mandrel so that the pipe is gently expanded substantially to an inner diameter corresponding to the diameter of the core (sealing ring) and the force necessary in order to push the pipe over the core (sealing ring) will be substantially reduced. Then, when the pipe has reached the prescribed position on the mandrel the segments 13' are shut down to the position in FIG 4C.

Turning now to the embodiment of FIGS 5 - 9 two different mandrels are used when working the second embodiment of the method of the invention. A first mandrel A is shown in FIGS 5 and 6 and comprises mandrel elements 10A to 13A corresponding to elements 10 to 13 in the embodiment disclosed in FIGS 1 - 3 and 4A. However, core 14 is replaced by a cylindrical enlargement 16A of mandrel element 13A, forming a shoulder 17A at the left end thereof and joining mandrel element 13A at a conical transition 18A at the right end thereof. Enlargement 16A has a diameter which corresponds to the diameter of the groove to be formed at the bottom thereof. The second mandrel B is identical with the mandrel disclosed in FIGS 1- 3 and 4A, the elements thereof being numbered 10B-14B.

The first step of the method of the invention according to the second embodiment is shown in FIG 5 and is identical with the step described with reference to FIG 1 though it is performed on a mandrel of different shape, viz. mandrel A and more particularly on mandrel element 11A. When the length l₁ has been heated to temperature T₁ which is above T₀ it is displaced axially on mandrel A to be pushed onto mandrel element 13A via transition element 12A och over enlargement 16A via transition element 18A to the position shown in FIG 6. Length l₁ at the opening of the pipe thus will be expanded to the diameter of enlargement 16A, i.e. the maximum diameter of core 14, FIGS. 1 - 3. The end portion of the pipe is cooled when it is still on mandrel A, e.g. by sprinkling water, and is then withdrawn from mandrel A.

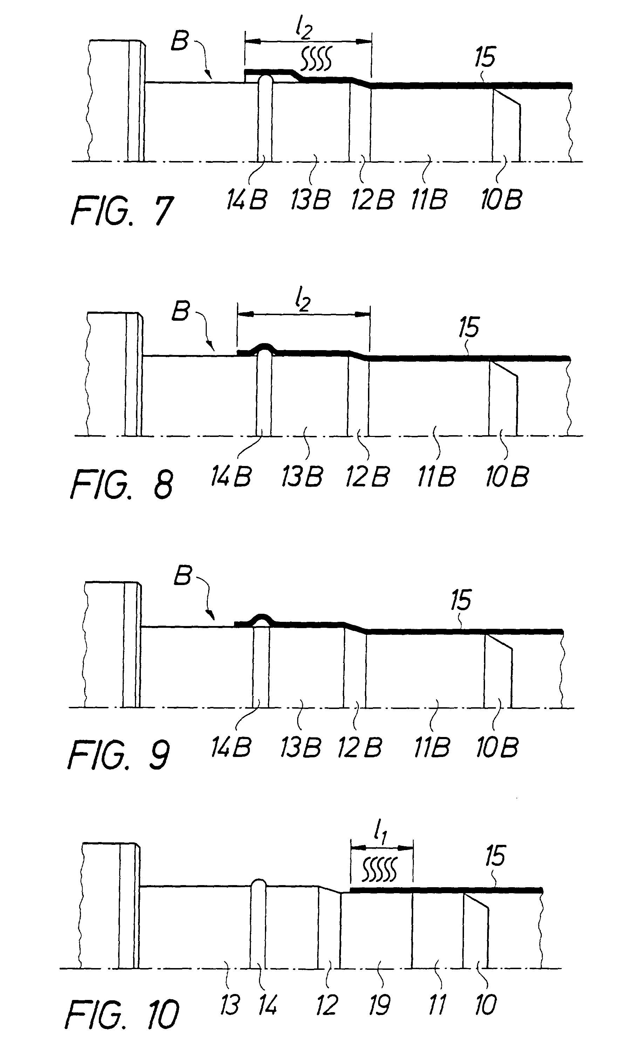

The pipe thus preformed is then pushed onto mandrel B to the position disclosed in FIG 7 and is reheated over the length 12 to temperature T₂ which is above temperature T₀, Then the plastic of the pipe will shrink onto the mandrel, and the shape of the socket with the inside groove will be imparted to length l₂, FIG 8. After cooling and collapsing of core 14B the socketed pipe will be withdrawn from mandrel B in the manner described with reference to FIGS 3 and 4A.

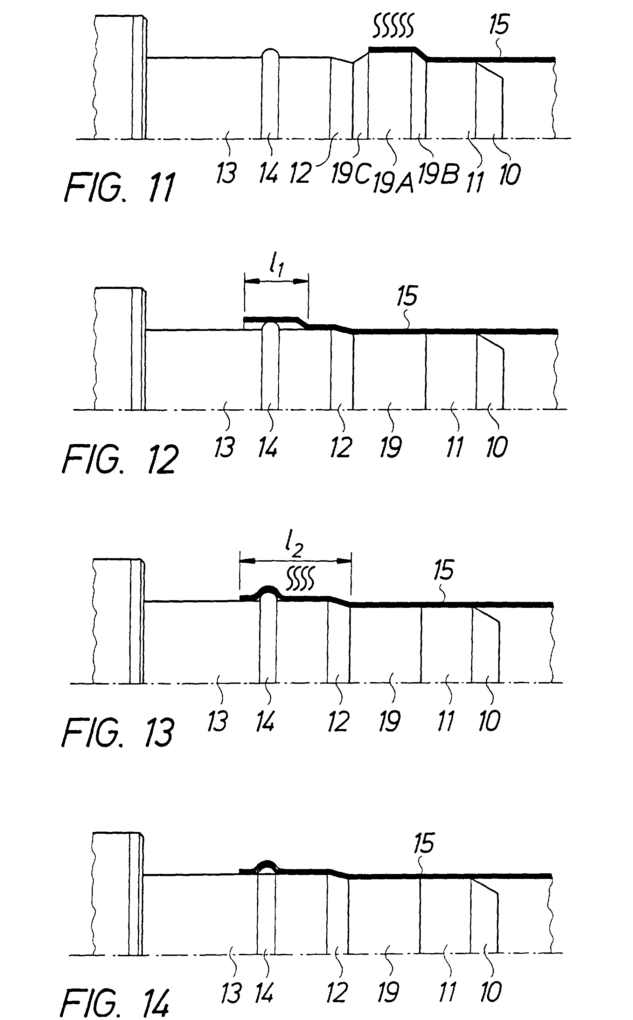

The second embodiment of the invention involves an additional step in relation to the first embodiment, viz. the preforming of the end portion of the pipe but on the other side the expansion of the pipe in the step of FIG 6 may require a lower axial force to be exerted on the pipe which may result in improved quality of the pipe. The embodiment of FIGS 10 - 14 can be seen as a modification of the embodiment of FIGS 1 - 3 and 4A, wherein the first mandrel element 10 has shorter axial length and is supplemented with an expandible sleeve 19 located adjacent the conical transition element 12. Sleeve 19 is made of an elastic material and can comprise e.g. a rubber sleeve with axial reinforcements, and it can be expanded by means of pressurized fluid. As disclosed in FIG 11 wherein sleeve 19 is expanded said sleeve in the expanded state thereof comprises a cylindrical central portion 19A having a diameter corresponding to the diameter of the collapsible core 14, and conical end portions 19B and 19C adjacent mandrel element 11 and transition portion 12, respectively. However, central portion 19A can also be conically widening slightly from end portion 19B to end portion 19C for reasons to be explained.

In the step shown in FIG 10 sleeve 19 is collapsed and the outside diameter thereof conforms with the outside diameter of mandrel element 11 so that the core is flush with said mandrel element. Pipe 15 is pushed onto mandrel element 11 and sleeve 19 as shown in FIG 10 and is heated to temperature T₁ over length l₁ said length being located over sleeve 19 which at the same time is under internal pressure by means of pressurized fluid. When the plastic material softens during heating sleeve 19 will expand and will in turn expand pipe 15 to conform with the shape of sleeve 19. If sleeve 19 is conical and the surface thereof is made slippery controlled axial compression can be applied to the plastic material of the pipe when the pipe is expanded on sleeve 19. The pressure of sleeve 19 is released and the pipe is pushed further axially along the mandrel over mandrel element 13 via transition element 12 the end portion of the pipe being pressed over expanded core 14 to the position shown in FIG 12. The next step, FIG 13, corresponds to that of FIG 3, and then the procedure terminates by the step of FIG 14, which corresponds to that of FIG 4A.

## Claims

1. A method of socketing a pipe of plastic having an annular groove inside the socket, wherein an end portion (15) of the pipe is pushed onto a mandrel and the groove is formed in the end portion, when heated, by means of a core (14) **characterized** in
**that** in socketing a pipe of oriented plastic the end portion (15) of the pipe is first pushed onto a first mandrel element (11; 11A) which is cylindrical and has a diameter corresponding to the inside diameter of the pipe,
**that** the end portion is heated to a temperature (T₁) which is above the glass transition temperature (T_{g}) of amorphous plastic and is above the crystalline melting point (Tₘ) of crystalline plastic, respectively, on said cylindrical mandrel element in the region (l₁) of the end portion of the pipe where the groove is to be located said region being located at the opening of said end portion of the pipe, the rest of said end portion of the pipe being maintained at a temperature below the glass transition temperature or the crystalline melting point, respectively,
**that** the end portion (15) when said region is at a temperature above the glass transition temperature or the crystalline melting point, respectively, is then pushed onto a second mandrel element (13; 13A) axially aligned with said first mandrel element the bottom portion of the socket being formed by said second mandrel element (13; 13A), and
**that** the groove is formed by means of the core (14) provided on said second mandrel element (13; 13A), in said region of the expanded end portion when being at a temperature above the glass transition temperature or the crystalline melting point, respectively.

2. The method of claim 1, **characterized** in that the groove is formed by means of a collapsible core (14).

3. The method of claim 1, **characterized** in that the groove is formed by means of a sealing ring slipped onto said second mandrel element (13; 13A) to form said core, said sealing ring being left in the groove formed when said end portion (15) is withdrawn from said second mandrel element.

4. The method of claim 1, **characterized** in that the groove is formed by means of a separate core slipped onto said second mandrel and having a preformed groove therein, said core being left in the pipe when said end portion is withdradwn from said second mandrel element to receive a sealing ring in the preformed groove therein.

5. The method of any of claims 1 to 4, **characterized** in that the end portion (15), when said region is at a temperature above the glass transition temperature or the crystalline melting point, respectively, is expanded to an inside diameter corresponding to the inside diameter at the bottom of the groove to be formed.

6. The method of claim 5 **characterized** in that the groove is formed in said region of the end portion when this is located on said second mandrel element (13) provided with the core (14).

7. The method of claim 6, **characterized** in that the entire socket after having been pushed over said second mandrel element (13) is heated to a temperature above the glass transition temperature (T_{g}) or the crystalline melting point (Tₘ), respectively, to conform by shrinking with the shape of said second mandrel element.

8. The method of any of claims 5 to 7, **characterized** in that said end portion of the pipe is cooled and is then withdrawn from the first and second mandrel elements (11,11A; 13,13A).

9. The method of claim 6 **characterized** in that said end portion (15) after having been withdrawn from said first and second mandrel elements (11A, 13A) is pushed onto a third mandrel element (13B) and is reheated to a temperature above the glass transition temperature (T_{g}) or the crystalline melting point (Tₘ), respectively, to conform by shrinking to the shape of said third mandrel element for forming the remaining part of the socket on said third mandrel element having a collapsible core (14B) for forming said groove inside the socket, the end portion being cooled and then withdrawn from said third mandrel element.

10. The method of claim 6 **characterized** in that the end portion (15) is expanded during heating on said first mandrel element (11)

11. The method of claim 10 **characterized** in that the end portion (15) is expanded by means of a pressurized sleeve (19) on said first mandrel element.

12. The method of claim 11 **characterized** in that the end portion is expanded on said sleeve (19) to form a conical socket.

13. The method of any of claims 1 to 12, **characterized** in that said end portion (15) of the pipe before being pushed onto said first mandrel element (11; 11A) is heated to a temperature close to but still below the glass transition temperature (T_{g}).

14. The method of any of claims 1 to 13 **characterized** in that the plastic of the pipe is polyvinylchloride.

15. The method of claim 14 **characterized** in that any temperature above the glass transition temperature (T_{g}) or the crystalline melting point, respectively, is at most 105°C.

16. The method of any of claims 1 to 13 **characterized** in that the plastic of the pipe is crosslinked polyethylene.

17. The method of claim 16 **characterized** in that any temperature above the glass transition temperature (T_{g}) or the crystalline melting point (Tₘ), respectively, is at most 190°C.

18. The method of any of claims 1 to 17 **characterized** in that said end portion of the pipe is pushed over said core (14) on said second mandrel element (13) along a collapsible path (13') gradually ascending to the top of the core in an expanded state, said path then being collapsed when the end portion is positioned on said second mandrel element.

19. The method of any of claims 1 to 18, **characterized** in that heating of the pipe is effected by hot fluid spray, IR radiation, or circulating hot gas.

20. The method of claim 19 **characterized** in that the IR radiation when used for heating the pipe has a wave length which deviates from the wavelengths at which the material of the pipe has IR absorption peaks.

## Patentansprüche

1. Verfahren zur Herstellung einer Muffe an einem Kunststoffrohr mit einer ringförmigen Nut in Inneren der Muffe, wobei der Endabschnitt (15) des Rohres auf einen Dorn geschoben wird und die Nut beim Erwärmen mit Hilfe eines Kernes (14) im Endabschnitt geformt wird, dadurch gekennzeichnet, dass
beim Herstellen einer Muffe an einem Rohr aus einem orientierten Kunststoff der Endabschnitt (15) des Rohres zuerst auf ein erstes Dornelement (11;11A) geschoben wird, das zylindrisch ist und einen Durchmesser hat, der dem Innendurchmesser des Rohres entspricht,
der Endabschnitt auf dem zylindrischen Dornelement im Bereich (l₁) des Endabschnittes des Rohres, in dem sich die Nut befinden soll, auf eine Temperatur (T₁) erwärmt wird, die über dem Umwandlungspunkt zweiter Ordnung (T_{g}) von amorphem Kunststoff bzw. über dem Kristallschmelzpunkt (Tₘ) von kristallinem Kunststoff liegt, wobei sich dieser Bereich an der Öffnung des Endabschnittes des Rohres befindet, wobei der Rest des Endabschnittes des Rohres bei einer Temperatur unter dem Umwandlungspunkt zweiter Ordnung bzw. dem Kristallschmelzpunkt gehalten wird,
der Endabschnitt (15) dann, wenn der Bereich bei einer Temperatur über dem Umwandlungspunkt zweiter Ordnung bzw. dem Kristallschmelzpunkt ist, auf ein zweites, mit dem ersten Dornelement axial ausgerichtetes Dornelement (13;13A) geschoben wird, wobei der untere Abschnitt der Muffe von diesem zweiten Dornelement (13;13A) geformt wird, und
die Nut mit Hilfe des Kerns (14), der auf dem zweiten Dornelement (13;13A) vorgesehen ist, in dem Bereich des erweiterten Endabschnittes geformt wird, wenn er sich bei einer Temperatur über dem Umwandlungspunkt zweiter Ordnung bzw. dem Kristallschmelzpunkt befindet.

2. Verfahren nach Anspruch 1, dadurch gekennzeichnet, dass die Nut mit einem zusammenklappbaren Kern (14) geformt wird.

3. Verfahren nach Anspruch 1, dadurch gekennzeichnet, dass die Nut mit einem Dichtungsring geformt wird, der auf das zweite Dornelement (13;13A) geschoben ist, um den Kern zu bilden, wobei der Dichtungsring in der geformten Nut verbleibt, wenn der Endabschnitt (15) von diesem zweiten Dornelement abgezogen wird.

4. Verfahren nach Anspruch 1, dadurch gekennzeichnet, dass die Nut mit einem separaten Kern geformt wird, der auf den zweiten Dorn geschoben ist und eine darin vorgeformte Nut hat, wobei der Kern im Rohr bleibt, wenn der Endabschnitt vom zweiten Dornelement abgezogen wird, um in der darin vorgeformten Nut einen Dichtungsring aufzunehmen.

5. Verfahren nach einem der Ansprüche 1 bis 4, dadurch gekennzeichnet, dass der Endabschnitt (15), wenn dieser Bereich bei einer Temperatur über dem Umwandlungspunkt zweiter Ordnung bzw. dem Kristallschmelzpunkt ist, bis zu einem Innendurchmesser gedehnt wird, der dem Innendurchmesser an der Unterseite der zu formenden Nut entspricht.

6. Verfahren nach Anspruch 5, dadurch gekennzeichnet, dass die Nut in dem Bereich des Endabschnittes geformt wird, wenn sich dieser auf dem zweiten Dornelement (13) befindet, das mit dem Kern (14) versehen ist.

7. Verfahren nach Anspruch 6, dadurch gekennzeichnet, dass die gesamte Muffe, nachdem sie über das zweite Dornelement (13) geschoben ist, auf eine Temperatur über dem Umwandlungspunkt zweiter Ordnung (T_{g}) bzw. dem Kristallschmelzpunkt (Tₘ) erwärmt wird, so dass sie durch Schrumpfen mit der Form des zweiten Dornelementes übereinstimmt.

8. Verfahren nach einem der Ansprüche 5 bis 7, dadurch gekennzeichnet, dass der Endabschnitt des Rohres abgekühlt wird und dann vom ersten und zweiten Dornelement (11,11A;13,13A) abgezogen wird.

9. Verfahren nach Anspruch 6, dadurch gekennzeichnet, dass der Endabschnitt (15) nach dem Abziehen vom ersten und zweiten Dornelement (11A,13A) auf ein drittes Dornelement (13B) geschoben wird und erneut auf eine Temperatur über dem Umwandlungspunkt zweiter Ordnung (T_{g}) bzw. dem Kristallschmelzpunkt (Tₘ) erwärmt wird, so dass er durch Schrumpfen mit der Form des dritten Dornelementes zum Formen des restlichen Teils der Muffe auf dem dritten Dornelement übereinstimmt, das einen zusammenklappbaren Kern (14B) zum Formen der Nut im Inneren der Muffe hat, wobei der Endabschnitt abgekühlt und dann von dem dritten Dornelement abgezogen wird.

10. Verfahren nach Anspruch 6, dadurch gekennzeichnet, dass der Endabschnitt (15) beim Erwärmen auf dem ersten Dornelement (11) gedehnt wird.

11. Verfahren nach Anspruch 10, dadurch gekennzeichnet, dass der Endabschnitt (15) mit einer Druckbuchse (19) auf dem ersten Dornelement gedehnt wird.

12. Verfahren nach Anspruch 11, dadurch gekennzeichnet, dass der Endabschnitt auf der Buchse (19) gedehnt wird, wodurch eine konische Muffe geformt wird.

13. Verfahren nach einem der Ansprüche 1 bis 12, dadurch gekennzeichnet, dass der Endabschnitt (15) des Rohres, bevor er auf das erste Dornelement (11;11A) geschoben wird, auf eine Temperatur nahe jedoch noch unter dem Umwandlungspunkt zweiter Ordnung (T_{g}) erwärmt wird.

14. Verfahren nach einem der Ansprüche 1 bis 13, dadurch gekennzeichnet, dass der Kunststoff des Rohres Polyvinylchlorid ist.

15. Verfahren nach Anspruch 14, dadurch gekennzeichnet, dass irgendeine Temperatur über dem Umwandlungspunkt zweiter Ordnung (T_{g}) bzw. dem Kristallschmelzpunkt höchstens 105°C beträgt.

16. Verfahren nach einem der Ansprüche 1 bis 13, dadurch gekennzeichnet, dass der Kunststoff des Rohres vernetztes Polyethylen ist.

17. Verfahren nach Anspruch 16, dadurch gekennzeichnet, dass irgendeine Temperatur über dem Umwandlungspunkt zweiter Ordnung (T_{g}) bzw. dem Kristallschmelzpunkt (Tₘ) höchstens 190°C beträgt.

18. Verfahren nach einem der Ansprüche 1 bis 17, dadurch gekennzeichnet, dass der Endabschnitt des Rohres zusammen mit einer zusammenklappbaren Bahn (13') über den Kern (14) auf dem zweiten Dornelement (13) geschoben wird, die im ausgebreiteten Zustand zur Spitze des Kerns allmählich ansteigt, wobei die Bahn dann zusammengeklappt wird, wenn sich der Endabschnitt auf dem zweiten Dornelement befindet.

19. Verfahren nach einem der Ansprüche 1 bis 18, dadurch gekennzeichnet, dass das Erwärmen des Rohres durch Sprühen eines heißen Fluids, IR-Strahlung oder ein zirkulierendes heißes Gas erfolgt.

20. Verfahren nach Anspruch 19, dadurch gekennzeichnet, dass die IR-Strahlung, wenn sie zum Erwärmen des Rohres verwendet wird, eine Wellenlänge hat, die von den Wellenlängen abweicht, bei denen das Material des Rohres IR-Absorptionspeaks hat.

## Revendications

1. Procédé pour emboîter un tube en matière plastique comportant une gorge annulaire à l'intérieur de l'embout, dans lequel une partie d'extrémité (15) du tube est poussée sur un mandrin et la gorge est formée sur la partie d'extrémité, lorsqu'elle est chauffée, par l'intermédiaire d'un noyau (14) caractérisé en ce que
lors de l'emboîtement d'un tube en matière plastique orientée, la partie d'extrémité (15) du tube est tout d'abord poussée sur un premier élément de mandrin (11 ; 11A) qui est cylindrique et possède un diamètre qui correspond au diamètre intérieur du tube,
la partie d'extrémité est chauffée à une température (T₁) qui se situe au-dessus de la température de transition vitreuse (T_{g}) de la matière plastique amorphe et se situe au-dessus de la température de fusion cristalline (Tₘ) de la matière plastique cristalline, respectivement, sur ledit élément de mandrin cylindrique dans la région (l₁) de la partie d'extrémité du tube dans laquelle la gorge est à positionner, ladite région étant positionnée au niveau de l'ouverture de ladite partie d'extrémité du tube, le reste de ladite partie d'extrémité du tube étant maintenu à une température située en deçà de la température de transition vitreuse ou de la température de fusion cristalline, respectivement,
la partie d'extrémité (15), lorsque ladite région se situe à une température située au-dessus de la température de transition vitreuse ou de la température de fusion cristalline, respectivement, est ensuite poussée sur un deuxième élément de mandrin (13 ; 13A) axialement aligné avec ledit premier élément de mandrin, la partie inférieure du culot étant formée par ledit deuxième élément de mandrin (13 ; 13A), et
la gorge est formée par l'intermédiaire du noyau (14) prévu sur ledit deuxième élément de mandrin (13 ; 13A), dans ladite région de la partie d'extrémité dilatée lorsque celle-ci se trouve à une température située au-dessus de la température de transition vitreuse ou de la température de fusion cristalline, respectivement.

2. Procédé selon la revendication 1, caractérisé en ce que la gorge est formée par l'intermédiaire d'un noyau rétractable (14).

3. Procédé selon la revendication 1, caractérisé en ce que la gorge est formée par l'intermédiaire d'une bague d'étanchéité glissée sur ledit deuxième élément de mandrin (13 ; 13A) de manière à former ledit noyau, ladite bague d'étanchéité étant laissée dans la gorge formée lorsque ladite partie d'extrémité (15) est enlevée dudit deuxième élément de mandrin.

4. Procédé selon la revendication 1, caractérisé en ce que la gorge est formée par l'intermédiaire d'un noyau séparé glissé sur ledit deuxième mandrin et comportant une gorge préformée dedans, ledit noyau étant laissé dans le tube lorsque ladite partie d'extrémité est enlevée dudit deuxième élément de mandrin de manière à recevoir une bague d'étanchéité dans la gorge préformée dedans.

5. Procédé selon l'une quelconque des revendications 1 à 4, caractérisé en ce que la partie d'extrémité (15), lorsque ladite région se trouve à une température située au-dessus de la température de transition vitreuse ou de la température de fusion cristalline, respectivement, est dilatée de manière à présenter un diamètre intérieur correspondant au diamètre intérieur au niveau de la partie inférieure de la gorge à former.

6. Procédé selon la revendication 5, caractérisé en ce que la gorge est formée dans ladite région de la partie d'extrémité lorsque celle-ci est positionnée sur ledit deuxième élément de mandrin (13) comportant le noyau (14).

7. Procédé selon la revendication 6 caractérisé en ce que le culot entier, après avoir été poussé sur ledit deuxième élément de mandrin (13), est chauffé à une température située au-dessus de la température de transition vitreuse (T_{g}) ou de la température de fusion cristalline (Tₘ), respectivement, de manière à ce que sa forme épouse par retrait la forme dudit deuxième élément de mandrin.

8. Procédé selon l'une quelconque des revendications 5 à 7, caractérisé en ce que ladite partie d'extrémité du tube est refroidie, puis est enlevée desdits premier et deuxième éléments de mandrin (11, 11A; 13, 13A).

9. Procédé selon la revendication 6, caractérisé en ce que ladite partie d'extrémité (15), après avoir été enlevée desdits premier et deuxième éléments de mandrin (11A, 13A), est poussée sur un troisième élément de mandrin (13B) et est à nouveau chauffée à une température située au-dessus de la température de transition vitreuse (T_{g}) ou de la température de fusion cristalline (Tₘ), respectivement, de manière à ce que sa forme épouse, par retrait, la forme dudit troisième élément de mandrin pour former la partie restante du culot sur ledit troisième élément de mandrin comportant un noyau rétractable (14B) pour former ladite gorge à l'intérieur du culot, la partie d'extrémité étant refroidie, puis enlevée dudit troisième élément de mandrin.

10. Procédé selon la revendication 6, caractérisé en ce que la partie d'extrémité (15) est dilatée durant le chauffage sur ledit premier élément de mandrin (11).

11. Procédé selon la revendication 10, caractérisé en ce que la partie d'extrémité (15) est dilatée par l'intermédiaire d'un manchon pressurisé (19) sur ledit premier élément de mandrin.

12. Procédé selon la revendication 11, caractérisé en ce que la partie d'extrémité est dilatée sur ledit manchon (19) de manière à former un culot conique.

13. Procédé selon l'une quelconque des revendications 1 à 12, caractérisé en ce que ladite partie d'extrémité (15) du tube, avant d'être poussée sur ledit premier élément de mandrin (11; 11A), est chauffée à une température voisine de la température de transition vitreuse (T_{g}), mais cependant encore située en deçà de celle-ci.

14. Procédé selon l'une quelconque des revendications 1 à 13, caractérisé en ce que la matière plastique du tube est du chlorure de polyvinyle.

15. Procédé selon la revendication 14, caractérisé en ce que la température située au-dessus de la température de transition vitreuse (T_{g}) ou de la température de fusion cristalline, respectivement, est au plus de 105°C.

16. Procédé selon l'une quelconque des revendications 1 à 13, caractérisé en ce que la matière plastique du tube est un polyéthylène réticulé.

17. Procédé selon la revendication 16, caractérisé en ce que la température située au-dessus de la température de transition vitreuse (T_{g}) ou de la température de fusion cristalline (Tₘ), respectivement, est au plus de 190°C.

18. Procédé selon l'une quelconque des revendications 1 à 17, caractérisé en ce que ladite partie d'extrémité du tube est poussée sur ledit noyau (14) sur ledit deuxième élément de mandrin (13) en suivant un chemin rétractable (13') remontant graduellement jusqu'à la partie supérieure du noyau dans un état dilaté, ledit chemin se rétractant ensuite lorsque la partie d'extrémité est positionnée sur ledit deuxième élément de mandrin.

19. Procédé selon l'une quelconque des revendications 1 à 18, caractérisé en ce que le chauffage du tube est effectué par pulvérisation d'un fluide chaud, rayonnement infrarouge, ou mise en circulation d'un gaz chaud.

20. Procédé selon la revendication 19, caractérisé en ce que le rayonnement infrarouge, lorsqu'il est utilisé pour chauffer le tube, possède une longueur d'onde différente des longueurs d'onde au niveau desquelles le matériau du tube présente des pics d'absorption dans l'infrarouge.
